# EUROPEAN PATENT APPLICATION

(11) **EP 4 339 301 A1**
(43) Date of publication of application: **20.03.2024**
(21) Application number: 22827948.5
(22) Date of filing: 08.03.2022
(51) Int. Cl.: C21B 5/00, C21B 7/16

(54) **GASEOUS REDUCING MATERIAL BLOWING METHOD AND BLAST FURNACE TUYERE**

(30) Priority: 23.06.2021 JP 2021104105
(71) Applicant: JFE Steel Corporation, Tokyo 100-0011 (JP)
(72) Inventor: MORITA, Yuya, Tokyo 100-0011 (JP); YANAGISAWA, Ryuta, Tokyo 100-0011 (JP); TAKAHASHI, Koichi, Tokyo 100-0011 (JP); OZAWA, Sumito, Tokyo 100-0011 (JP); NOUCHI, Taihei, Tokyo 100-0011 (JP); KAWASHIRI, Yuki, Tokyo 100-0011 (JP); KASHIHARA, Yusuke, Tokyo 100-0011 (JP)
(74) Representative: Hoffmann Eitle
(86) International application number: PCT/JP2022/009891
(87) International publication number: WO 2022/270027

(57) **Abstract**

Provided are a method for blowing a gaseous reducing agent and a blast furnace tuyere with which it is possible to prevent, in the blast furnace tuyere, a combustion reaction from occurring in the vicinity of a connection part between the tuyere and a blowpipe and a combustion flame that is formed in a raceway space in front of the tuyere from returning to the inside of the tuyere.

The method includes blowing the gaseous reducing agent into a blast furnace by using a blast furnace tuyere 10, in which the blast furnace tuyere 10 has a main flow-through hole 12 and a sub flow-through hole 14 that is disposed on an outer side in a radial direction of the main flow-through hole 12, in which a flow speed of an oxygen-containing gas that flows through the main flow-through hole 12 is increased in a tuyere tip part 13 of the main flow-through hole 12, in which the gaseous reducing agent that flows through the sub flow-through hole 14 is converged with the oxygen-containing gas in the tuyere tip part 13 of the main flow-through hole 12 to form a mixed gas, and in which the mixed gas is blown into the blast furnace.

## Description

### Technical Field

The present invention relates to a method for blowing a gaseous reducing agent and a blast furnace tuyere which are used for blowing a gaseous reducing agent into a blast furnace.

### Background Art

Nowadays, in response to a strong demand for reducing the amount of CO₂ emission and for promoting energy saving to address global environment issues and fossil fuel exhaustion issues, a low-reducing agent ratio (low RAR) operation is being strongly promoted in blast furnace operations in steel plants.

In a general blast furnace, by using a reducing gas containing CO, H₂, and the like which is generated by blowing pulverized coal and hot air having a temperature of about 1200°C through a tuyere so that coke and the pulverized coal react with oxygen contained in the hot air, iron ore or the like in the blast furnace is reduced. Previously, an operation in which only coke is used as a reducing agent or an operation in which coke and heavy fuel oil that is blown through a tuyere are used as reducing agents has prevailed. Nowadays, however, some of the reducing agent, that is, some of the coke, has been replaced by pulverized coal. In addition, a technique in which pulverized coal that has been pulverized to a particle size of 100 um or less is blown through a tuyere has been established.

Moreover, nowadays, a technique in which reducing agents such as waste plastic and the like are blown into a blast furnace has also been established. Due to such improved tuyere blowing techniques, there is a significant decrease in energy consumption in an ironmaking process.

Patent Literature 1 discloses a technique in which the amount of CO₂ gas emission from a blast furnace is reduced by effectively utilizing a blast furnace exhaust gas. In this technique, by synthesizing recycled methane from CO and CO₂ contained in the blast furnace exhaust gas, and by blowing the recycled methane through a tuyere again to use it as a reducing agent, there is a reduction in the CO₂ emission intensity from the blast furnace due to carbon being circulated in the blast furnace process.

A combustion reaction occurs between the reducing agents which are blown through a tuyere and an oxygen-containing gas which is blown along with the reducing agents. Then, oxygen which has remained without reacting with the reducing agents and carbon dioxide (CO₂) and water vapor (H₂O), which are generated through the combustion reaction between oxygen and the reducing agents, react with coke in a coke-packed bed which exists in front of the tuyere. Finally, these substances are made into a high-temperature reducing gas (hereinafter, referred to as "bosh gas") composed of carbon monoxide (CO), hydrogen (H₂), and nitrogen (N₂).

Incidentally, the higher the combustion rate of the reducing agents which are blown through a tuyere, the lower the amount of coke consumed. Therefore, regarding energy saving in the ironmaking process, improving the combustion rate of the reducing agents which are blown through the tuyere is significantly important.

In addition, the bosh gas which is generated in front of the tuyere has not only the function of reducing iron ore but also the function of forming a combustion space which is called a "raceway" in front of the tuyere by pushing out the coke in front of the tuyere. Since the raceway is important as a space in which the reducing agents such as pulverized coal and the like that are blown through the tuyere are sufficiently combusted, there is a marked decrease in the combustion rate of the reducing agents which are blown through the tuyere in the case where the raceway is not formed. Therefore, to achieve energy saving in a blast furnace and an ironmaking process, it is important that the raceway be formed in front of the tuyere and that the reducing agents be stably supplied to the raceway.

Regarding the formation of the raceway, Non Patent Literature 1 discloses that it is possible to estimate the size of the raceway from the bore diameter of the tuyere, a blown gas flow speed in the tuyere tip part, and the like.

Regarding a method for supplying the reducing agents into the raceway in a conventional blast furnace, a lance is inserted into a blowpipe through which a high-temperature gas containing oxygen is blown into the blast furnace, and the reducing agents are blown through the lance. In addition, Non Patent Literature 2 discloses a technique in which the gasification rate of pulverized coal in the raceway is improved by premixing solid reducing agents such as pulverized coal and the like and a combustion-supporting gas containing oxygen in the tuyere.

### Citation List

### Patent Literature

PTL 1: Japanese Unexamined Patent Application Publication No. 2011-225969

### Non Patent Literature

NPL 1: Yotaro OHNO, Takeshi FURUKAWA, and Masahiro MATSUURA; "Combustion Behavior of Pulverized Coal in a Raceway Cavity of Blast Furnace and a Large Amount Injection Technology", Tetsu-to-Hagané, vol. 78, No. 1 (1992-1), pp. 50 to 57.
NPL 2: Takeshi FURUKAWA, Masahiro MATSUURA, Yotaro OHNO, and Sumiyuki KISHIMOTO; "Effect of the Structures of Injection Facilities on Combustion Characteristics in the Pulverized Coal Injection into a Blast Furnace", Tetsu-to-Hagané, vol. 82, No. 12 (1996-12), pp. 993 to 998.
NPL 3: Naomichi Ukai; "Transition of Tuyeres", Kinzoku (Materials Science and Technology), vol. 48, No. 3 (1978-3), pp. 39 to 43.
NPL 4: JAPAN SOCIETY for SAFETY ENGINEERING; "Handbook of Safety Engineering", 4th edition, published by CORONA PUBLISHING CO., LTD., 2019-7, p. 241.

### Summary of Invention

### Technical Problem

However, in the case of the tuyere disclosed in Non Patent Literature 2, when a reducing gas such as a BFG, hydrogen, or the like or a combustible gas such as a natural gas, recycled methane, or the like is added as a reducing agent, there may be a case where so-called intra-tuyere combustion, in which a combustion flame that is formed in a raceway space in front of the tuyere returns to the inside of the tuyere, occurs. Such intra-tuyere combustion causes a problem of melt loss or thermal deformation occurring in the front end of a burner which is not cooled with water. Although it is possible to prevent melt loss and thermal deformation from occurring in a burner by cooling the front end of a burner in addition to the tuyere with water, there is a problem of an increase in heat loss or an increased risk of gas leakage occurring in a connection part between a burner and the tuyere.

In addition, Non Patent Literature 3 discloses a tuyere for blowing heavy fuel oil into a blast furnace to use it as a reducing agent, in which a reducing agent-blowing nozzle for blowing heavy fuel oil is disposed in the vicinity of a connection part between the tuyere and a blowpipe. Therefore, consideration is given to using the reducing agent-blowing nozzle according to Non Patent Literature 3 for a tapered part in the tuyere disclosed in Non Patent Literature 2 to add a reducing gas such as a BFG, hydrogen, or the like or a combustible gas such as a natural gas, recycled methane, or the like. However, when a combustion flame which is formed in a raceway space in front of the tuyere returns to the inside of the tuyere, there is a problem of an increase in heat load due to combustion continuing in the tapered part in the tuyere or breakage occurring in the reducing agent-blowing nozzle.

Therefore, the present inventors diligently conducted investigations to solve the problems of the conventional techniques described above and, as a result, developed the method for blowing a gaseous reducing agent and the blast furnace tuyere according to the present invention.

That is, an object of the present invention is to provide a method for blowing a gaseous reducing agent and a blast furnace tuyere with which it is possible to prevent, in the blast furnace tuyere, a combustion reaction from occurring in the vicinity of a connection part between the tuyere and a blowpipe and a combustion flame that is formed in a raceway space in front of the tuyere from returning to the inside of the tuyere.

### Solution to Problem

The subject matter of the present invention to solve the problems described above is as follows.
[1] A method for blowing a gaseous reducing agent, the method including blowing the gaseous reducing agent into a blast furnace by using a blast furnace tuyere, in which the blast furnace tuyere has a main flow-through hole and a sub flow-through hole that is disposed on an outer side in a radial direction of the main flow-through hole, in which a flow speed of an oxygen-containing gas that flows through the main flow-through hole is increased in a tuyere tip part of the main flow-through hole, in which the gaseous reducing agent that flows through the sub flow-through hole is converged with the oxygen-containing gas in the tuyere tip part of the main flow-through hole to form a mixed gas, and in which the mixed gas is blown into the blast furnace.
[2] The method for blowing a gaseous reducing agent according to item [1], in which a flow speed of the mixed gas which is blown through the tuyere tip part is 55 times or more a burning velocity of the mixed gas.
[3] The method for blowing a gaseous reducing agent according to item [1] or [2], in which the oxygen-containing gas contains oxygen in an amount of 50 volume% or more.
[4] The method for blowing a gaseous reducing agent according to any one of items [1] to [3], in which the gaseous reducing agent contains at least one of a BFG, a COG, ammonia, carbon monoxide, hydrogen, methane, ethane, ethylene, acetylene, propane, propylene, propyne, butane, butene, butyne, methanol, ethanol, and dimethyl ether.
[5] A blast furnace tuyere for blowing a gaseous reducing agent into a blast furnace, the tuyere having a main flow-through hole and a sub flow-through hole which is disposed around the main flow-through hole, in which an internal diameter of a tuyere tip part of the main flow-through hole is set to be equal to or smaller than internal diameters of parts other than the tuyere tip part and equal to or smaller than an internal diameter of a blowpipe that is used for supplying a gas into the main flow-through hole, and in which an end on a tuyere tip part side of the sub flow-through hole is set to be converged with the tuyere tip part of the main flow-through hole.

### Advantageous Effects of Invention

In the method for blowing a gaseous reducing agent and the blast furnace tuyere according to the present invention, the gaseous reducing agent is converged with an oxygen-containing gas in the tuyere tip part of a main flow-through hole and blown through the tuyere tip part into a blast furnace along with the oxygen-containing gas. Therefore, a combustion reaction does not occur in the vicinity of a connection part between the blowpipe and the blast furnace tuyere, and a combustion reaction occurs after the oxygen-containing gas and the gaseous reducing agent have been blown through the tuyere tip part into the blast furnace.

In addition, since the flow speed of the mixed gas which is blown through the tuyere tip part of the main flow-through hole is increased, it is possible to inhibit a combustion flame which is formed in a raceway space in front of the tuyere from returning to the inside of the tuyere. Specifically, by increasing the flow speed of the oxygen-containing gas in the tuyere tip part of the main flow-through hole so that the flow speed of the gas which is blown through the tuyere tip part of the main flow-through hole is sufficiently larger than the burning velocity, it is possible to prevent with certainty a combustion flame which is formed in a raceway space in front of the tuyere from returning into the inside of the tuyere.

In addition, since a combustion reaction does not occur in the tuyere, it is not necessary to perform water cooling for preventing melt loss and thermal deformation occurring in the front end of the blowpipe, which results in the effect of decreasing a heat loss.

### Brief Description of Drawings

[Fig. 1] Fig. 1 is a sectional schematic diagram illustrating one example of a blast furnace tuyere according to the present invention.
[Fig. 2] Fig. 2(a) to Fig. 2(c) are sectional schematic diagrams illustrating blast furnace tuyeres of examples of the present invention and a comparative example.
[Fig. 3] Fig. 3 is a graph illustrating an example of a change in temperature in the blast furnace tuyere of the comparative example.

### Description of Embodiments

Hereafter, the embodiments of the method for blowing a gaseous reducing agent and the blast furnace tuyere according to the present invention will be specifically described with reference to the drawings.

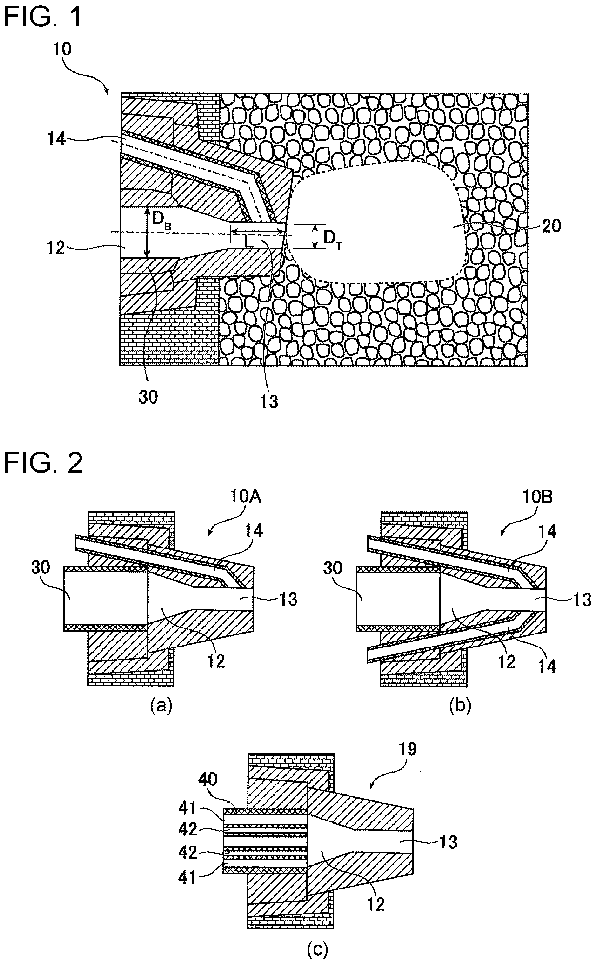

Fig. 1 is a sectional schematic diagram illustrating a blast furnace tuyere 10 according to the present embodiment.

The blast furnace tuyere 10 according to the present embodiment, which is a tuyere for blowing a gaseous reducing agent into a blast furnace, has a main flow-through hole 12 and a sub flow-through hole 14 which is disposed on the outer side in the radial direction of the main flow-through hole 12. The main flow-through hole 12 is a flow-through hole through which an oxygen-containing gas is blown into a blast furnace. In addition, the sub flow-through hole 14 is a flow-through hole which is different from the main flow-through hole 12 and through which a gaseous reducing agent is blown into the blast furnace.

On the delivery side of the main flow-through hole 12 for oxygen-containing gas, a tuyere tip part 13 which has an internal diameter D_{T} and a length L is disposed. The internal diameter D_{T} of the tuyere tip part 13 is set to be equal to or smaller than the internal diameters of the parts of the main flow-through hole 12 other than the tuyere tip part 13 and equal to or smaller than the internal diameter D_{B} of a blowpipe 30 which is used for supplying a gas into the main flow-through hole 12. The length L of the tuyere tip part 13 is set to be larger than the internal diameter D_{T}. In addition, the end of the sub flow-through hole 14 on the tuyere tip part side, that is, on the side of the tuyere tip part 13, is set to be converged with the tuyere tip part 13 of the main flow-through hole 12.

In addition, the method for blowing the gaseous reducing agent according to the present embodiment is a method in which the gaseous reducing agent is blown into the blast furnace by using the blast furnace tuyere 10. Specifically, the flow speed of the oxygen-containing gas which is supplied through the blowpipe 30 into the main flow-through hole 12 is increased in the tuyere tip part 13 of the main flow-through hole 12, and the oxygen-containing gas is blown into the blast furnace. In addition, at the same time, the gaseous reducing agent is blown through the sub flow-through hole 14, converged with the oxygen-containing gas which flows through the tuyere tip part 13 of the main flow-through hole 12, and blown into the blast furnace.

In the present embodiment, as described above, the internal diameter D_{T} of the tuyere tip part 13 of the main flow-through hole 12 is set to be equal to or smaller than the internal diameters of the parts of the main flow-through hole 12 other than the tuyere tip part 13 and equal to or smaller than the internal diameter D_{B} of the blowpipe 30 which is used for supplying a gas into the main flow-through hole 12. With this, the flow speed of the oxygen-containing gas which is supplied through the blowpipe 30 into the main flow-through hole 12 is increased in the tuyere tip part 13 of the main flow-through hole 12. In addition, since the end of the sub flow-through hole 14 on the tuyere tip part side, that is, on the side of the tuyere tip part 13, is set to be converged with the tuyere tip part 13 of the main flow-through hole 12, the gaseous reducing agent which is blown through the sub flow-through hole 14 is converged with the oxygen-containing gas which flows through the tuyere tip part 13 of the main flow-through hole 12.

Through the combustion and gasification reaction of the oxygen-containing gas which is blown through the main flow-through hole 12 with coke in a coke-packed bed in the blast furnace which exists in front of the blast furnace tuyere 10 and the gaseous reducing agent which is blown through the sub flow-through hole 14, a bosh gas is generated. In addition, a raceway 20 is formed by the bosh gas in front of the blast furnace tuyere 10.

Incidentally, the amount of coke in the coke-packed bed in the blast furnace which is consumed decreases with an increase in the amount of the gaseous reducing agent which is blown through the sub flow-through hole 14 and which undergoes a combustion reaction with the oxygen-containing gas that is blown through the main flow-through hole 12. Therefore, when the reducing agent is blown through the blast furnace tuyere 10, it is important that a raceway 20 having sufficient space be formed in front of the blast furnace tuyere 10 so that a sufficient amount of the reducing agent undergoes a combustion and gasification reaction.

On the other hand, it is preferable that a gas that contains oxygen in an amount of 50 volume% or more be used as the oxygen-containing gas which is blown through the main flow-through hole 12. In the case where a gas that contains oxygen in an amount of 50 volume% or more is blown as the oxygen-containing gas, since the combustion of the gaseous reducing agent is promoted even in the case where there is an increase in the amount of the gaseous reducing agent blown, there is a further decrease in the amount of coke consumed in the blast furnace operation, which results in a significant decrease in the amount of CO₂ emission from the blast furnace.

As described above, in the case where the oxygen-containing gas having a high oxygen concentration is used, since there is a decrease in the amount of nitrogen in the oxygen-containing gas, there is a decrease in the amount of the oxygen-containing gas blown. To form a raceway 20 having sufficient space under such a blowing condition, by setting the internal diameter D_{T} of the tuyere tip part 13 of the main flow-through hole 12 to be equal to or smaller than the internal diameter D_{B} of the blowpipe 30, the flow speed of the oxygen-containing gas in the tuyere tip part 13 is increased. In addition, the gaseous reducing agent which is supplied through the sub flow-through hole 14 is converged with the oxygen-containing gas in the tuyere tip part 13.

With this, since a premixed gas composed of the oxygen-containing gas and the gaseous reducing agent does not exist in the vicinity of a connection part between the blast furnace tuyere 10 and the blowpipe 30, it is possible to prevent a combustion reaction from occurring in the vicinity of the tapered part in the tuyere. In addition, since the premixed gas which has been formed by converging the oxygen-containing gas and the gaseous reducing agent in the tuyere tip part 13 is blown through the tuyere tip part 13 into the blast furnace at a high flow speed, the premixed gas undergoes a combustion reaction after having been blown through the tuyere tip part 13 into the blast furnace.

Incidentally, it is preferable that the length of the tuyere tip part 13, whose internal diameter D_{T} is smaller than that of the other parts, be larger than the internal diameter D_{T} because this makes it possible to increase with certainty the flow speed of the oxygen-containing gas in the tuyere tip part 13. In addition, it is preferable that the main flow-through hole 12 be formed in such a manner that the internal diameter of the hole gradually decreases from a connection part between the main flow-through hole 12 and the blowpipe 30 toward the tuyere tip part 13 because this also makes it possible to increase with certainty the flow speed of the oxygen-containing gas in the tuyere tip part 13.

It is preferable that the flow speed of the gas which is blown through the tuyere tip part 13 of the main flow-through hole 12 be 55 times or more the burning velocity of the mixed gas composed of the oxygen-containing gas and the gaseous reducing agent which are converged in the tuyere tip part 13. Here, as the burning velocity of the mixed gas composed of the oxygen-containing gas and the gaseous reducing agent, for example, the value disclosed in Non Patent Literature 4 may be used. With this, it is possible to prevent with certainty a combustion flame which is formed in the raceway 20 in front of the blast furnace tuyere 10 from returning into the blast furnace tuyere 10.

Examples of a gas which may be blown through the sub flow-through hole 14 as the gaseous reducing agent include a BFG (blast furnace gas), a COG (coke oven gas), ammonia, carbon monoxide, hydrogen, methane, ethane, ethylene, acetylene, propane, propylene, propyne, butane, butene, butyne, methanol, ethanol, dimethyl ether, and a natural gas. Of such gases, it is particularly preferable that a gas containing at least one of a BFG (blast furnace gas), a COG (coke oven gas), carbon monoxide, hydrogen, methane, ethane, ethylene, acetylene, propane, propylene, propyne, butane, butene, butyne, methanol, ethanol, dimethyl ether, and a natural gas be used. Since such gases are generated as a by-product in ironmaking and steelmaking processes or produced from such a by-product, it is possible to circulate carbon in the ironmaking and steelmaking processes, which results in a decrease in the amount of CO₂ emission from the ironmaking and steelmaking processes.

Incidentally, although a case where one sub flow-through hole 14 is disposed on the outer side in the radial direction of the main flow-through hole 12 has been described in the embodiment above, plural sub flow-through holes 14 may be disposed on the outer side in the radial direction of the main flow-through hole 12. In this case, of the momentum components of the gaseous reducing agent gases which are blown through the plural sub flow-through holes 14 and converged in the main flow-through hole 12, it is preferable that the plural sub flow-through holes 14 be arranged so that the components in the radial direction of the main flow-through hole 12 cancel each other out. With this, of the momentum components of the gaseous reducing agent gas, only the component in the longitudinal direction of the main flow-through hole 12 is left.

### EXAMPLES

A combustion test which was performed to verify the effect of the present invention by installing the hot scale models of a blast furnace tuyere as the examples of the present invention and a comparative example in a furnace with a coke-packed bed will be described below.

The present combustion test was performed by blowing oxygen at room temperature as the oxygen-containing gas at a flow rate of 30.3 Nm³/h to 58.8 Nm³/h and a city gas (methane) at room temperature as the gaseous reducing agent at a flow rate of 23.7 Nm³/h to 46.1 Nm³/h through the hot scale model of a blast furnace tuyere into the furnace with a coke-packed bed. The flow rate was set so that the intra-tuyere combustion occurrence conditions in the hot scale models of a blast furnace tuyere were similar to those in actual blast furnace tuyeres.

As illustrated in Fig. 2(a), a hot scale model 10A of a blast furnace tuyere, in which one sub flow-through hole 14 was disposed on the outer side in the radial direction of the main flow-through hole 12, was prepared as an example of the present invention (example 1, example 2, and example 4). In addition, as illustrated in Fig. 2(b), a hot scale model 10B of a blast furnace tuyere, in which two sub flow-through holes 14 were disposed on the outer sides in the radial direction of the main flow-through hole 12 in such a manner that the two sub flow-through holes were symmetric with respect to the axis of the main flow-through hole 12, was prepared (example 3). In example 1 to example 4, that is, in the hot scale models 10A and 10B of a blast furnace tuyere, the central lines of the sub flow-through holes 14, which had mouths open to the tuyere tip part 13 of the main flow-through hole 12, were set to intersect with the central line of the main flow-through hole 12.

Moreover, as illustrated in Fig. 2(c), a hot scale model 19 of a blast furnace tuyere, in which the sub flow-through hole 14 was not disposed on the outer side in the radial direction of the main flow-through hole 12, and in which a multiport burner 40 that is disclosed in Non Patent Literature 2 was disposed on the end of the tapered part of the main flow-through hole 12 opposite to the end on which the tuyere tip part 13 was disposed, was prepared as a comparative example. In addition, oxygen was blown through a flow-through hole 41, which was disposed on the outer side in the radial direction of the multiport burner 40, and the city gas was blown through a flow-through hole 42, which was disposed on the inner side in the radial direction of the multiport burner 40, at the same flow rates as in the case of example 1 to example 4.

In addition, for each of example 1 to example 4 and the comparative example, a thermocouple was disposed in the vicinity of a connection part between the hot scale model of a blast furnace tuyere and the blowpipe 30 or the multiport burner 40 to measure the temperature in the blast furnace tuyere. In addition, increases in the temperature of the cooling water of hot scale models 10A, 10B, and 19 of a blast furnace tuyere were compared. The results of the combustion test are given in Table 1.

**[Table 1]**

| | Example 1 | Example 2 | Example 3 | Example 4 | Comparative Example |
|---|---|---|---|---|---|
| Blowing Method | Tip Convergence | Tip Convergence | Tip Convergence | Tip Convergence | O₂: Multiport |
| | | | | | -CH₄: Multiport |
| Scale Model | 10A | 10A | 10B | 10A | 19 |
| D_{T} (mm) | 16 | 16 | 16 | 16 | 16 |
| Oxygen Flow Rate (Nm³/h) | 30.3 | 46.9 | 46.9 | 58.8 | 46.9 |
| Sub Flow-through Hole Number | 1 | 1 | 2 | 1 | 0 |
| D_{S} (mm) | 12 | 12 | 8 | 12 | - |
| L (mm) | 20 | 20 | 20 | 20 | - |
| Methane Flow Rate (Nm³/h) | 23.7 | 36.7 | 36.7 | 46.1 | 36.7 |
| Blown Gas Flow speed in Tuyere Tip Part (m/s) | 81.4 | 126 | 126 | 158 | 126 |
| Blown Gas Flow speed /Burning velocity | 36 | 55 | 55 | 69 | 55 |
| Combustion in Vicinity of Connection Part between Blowpipe and Tuyere | Non | Non | Non | Non | Occurred |
| Increase in Temperature of Tuyere Cooling Water | Larger than That of Example 2 | Standard | Equivalent to Example 2 | Equivalent to Example 2 | Significantly Larger than That of Example 2 |

| | | | | | |
|---|---|---|---|---|---|
| Note) Dr; internal diameter of the tuyere tip part, Ds: internal diameter of the sub flow-through hole, L: length of the tuyere tip part | | | | | |

In the case of example 1 to example 4, since no particular change in temperature was recognized in the vicinity of a connection part between any one of the hot scale models 10A and 10B of a blast furnace tuyere and the blowpipe 30 (tapered part in the tuyere), it was clarified that intra-tuyere combustion did not occur, as indicated in Table 1. In addition, a combustion reaction between the city gas (gaseous reducing agent) and oxygen stably continued in the raceway 20.

Moreover, of example 1 to example 4, in the case of example 2 to example 4 where the flow speed of the mixed gas which is blown through the tuyere tip part 13 was large, that is, 55 times or more the burning velocity of the mixed gas, the amount of increase in the temperature of cooling water of the hot scale models 10A, 10B, and 19 of a blast furnace tuyere was smaller than that in the case of example 1. From such results, as in the case of example 2 to example 4, it was clarified that, by setting the flow speed of the mixed gas which is blown through the tuyere tip part 13 to be 55 times or more the burning velocity of the mixed gas, there is an increase in the distance between a starting position at which combustion occurs in the mixed gas (position of a flame front) and the tuyere tip part 13, and there is a decrease in heat load (heat loss) placed on the blast furnace tuyere, which results in an advantage in terms of heat.

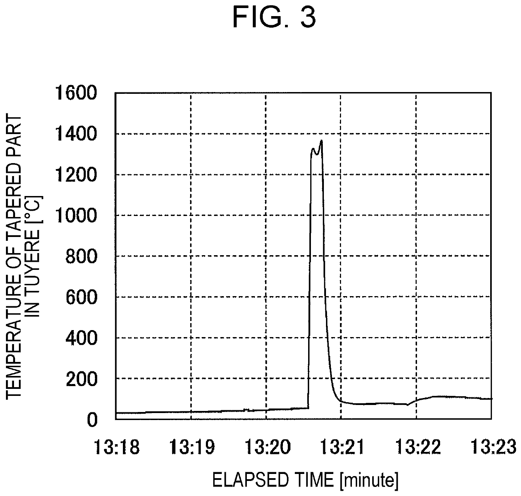

In contrast, in the case of the comparative example, as illustrated in Fig. 3, since there was an increase in temperature in the vicinity of a connection part between the hot scale model 19 of a blast furnace tuyere and the blowpipe 30 (tapered part in the tuyere), it was clarified that intra-tuyere combustion occurred.

### Reference Signs List

- 10: blast furnace tuyere
- 10A, 10B, 19: hot scale model of blast furnace tuyere
- 12: main flow-through hole
- 13: tuyere tip part
- 14: sub flow-through hole
- 20: raceway
- 30: blowpipe
- 40: multiport burner
- 41: flow-through hole on outer side in radial direction
- 42: flow-through hole on inner side in radial direction
- D_{T}: internal diameter of tuyere tip part
- L: length of tuyere tip part
- D_{B}: internal diameter of blowpipe

## Claims

1. A method for blowing a gaseous reducing agent, the method comprising blowing the gaseous reducing agent into a blast furnace by using a blast furnace tuyere,
wherein the blast furnace tuyere has a main flow-through hole and a sub flow-through hole that is disposed on an outer side in a radial direction of the main flow-through hole,
wherein a flow speed of an oxygen-containing gas that flows through the main flow-through hole is increased in a tuyere tip part of the main flow-through hole,
wherein the gaseous reducing agent that flows through the sub flow-through hole is converged with the oxygen-containing gas in the tuyere tip part of the main flow-through hole to form a mixed gas, and
wherein the mixed gas is blown into the blast furnace.

2. The method for blowing a gaseous reducing agent according to Claim 1, wherein a flow speed of the mixed gas which is blown through the tuyere tip part is 55 times or more a burning velocity of the mixed gas.

3. The method for blowing a gaseous reducing agent according to Claim 1 or 2, wherein the oxygen-containing gas contains oxygen in an amount of 50 volume% or more.

4. The method for blowing a gaseous reducing agent according to any one of Claims 1 to 3, wherein the gaseous reducing agent contains at least one of a BFG, a COG, ammonia, carbon monoxide, hydrogen, methane, ethane, ethylene, acetylene, propane, propylene, propyne, butane, butene, butyne, methanol, ethanol, and dimethyl ether.

5. A blast furnace tuyere for blowing a gaseous reducing agent into a blast furnace,
the tuyere having a main flow-through hole and a sub flow-through hole which is disposed around the main flow-through hole,
wherein an internal diameter of a tuyere tip part of the main flow-through hole is set to be equal to or smaller than internal diameters of parts other than the tuyere tip part and equal to or smaller than an internal diameter of a blowpipe that is used for supplying a gas into the main flow-through hole, and
wherein an end on a tuyere tip part side of the sub flow-through hole is set to be converged with the tuyere tip part of the main flow-through hole.
